# EUROPEAN PATENT APPLICATION

(11) **EP 3 639 656 A1**
(43) Date of publication of application: **22.04.2020**
(21) Application number: 18200883.9
(22) Date of filing: 17.10.2018
(51) Int. Cl.: A01K 1/01

(54) **STABLE FLOOR DISCHARGE SYSTEM FOR ANIMAL EXCREMENTS AND STABLE FLOOR COMPRISING THE STABLE FLOOR DISCHARGE SYSTEM, AN ANIMAL SUPPORT GRID AND A FLOOR PART**

(71) Applicant: Mathijssen, Johannes Adrianus Wilhelmus Maria, 4873 LW Etten-Leur (NL)
(72) Inventor: Mathijssen, Johannes Adrianus Wilhelmus Maria, 4873 LW Etten-Leur (NL)
(74) Representative: 't Jong, Bastiaan Jacob

(57) **Abstract**

The invention relates to a stable floor (1) discharge system for animal excrements, **comprising**:
- an elongate gutter (2) with an inlet between the upper edges (6) of the walls of the gutter (2), a thick fraction outlet and a thin fraction outlet (18, 19), longitudinally spaced apart and separated from each other;
- conveying means, such as a conveyor belt (11), mounted within the gutter (2) for receiving animal excrements through the inlet of the gutter (2), which conveying means comprise a screening conveying surface (16) for separating the animal excrements into a thick and a thin fraction, moveable between a first and a second longitudinal end (13, 15), which conveying means are mounted over the thin fraction outlet (18, 19) and with the first longitudinal end (13, 15) of the screening conveying surface (16) positioned adjacent to the thick fraction outlet;
and
- covering means, such as a gastight layer, extending between the longitudinal walls of the gutter (2) and arranged between the screening conveying surface (16) and the bottom (3) of the gutter (2), which covering means are provided with at least one hole for draining the thin fraction to the thin fraction outlet (18, 19).

## Description

The invention relates to a stable floor discharge system for animal excrements, comprising:
- an elongate gutter with an inlet between the upper edges of the walls of the gutter, a thick fraction outlet and a thin fraction outlet, longitudinally spaced apart and separated from each other; and
- conveying means, such as a conveyor belt, mounted within the gutter for receiving animal excrements through the inlet of the gutter, which conveying means comprise a screening conveying surface for separating the animal excrements into a thick and a thin fraction, moveable between a first and a second longitudinal end, which conveying means are mounted over the thin fraction outlet and with the first longitudinal end of the screening conveying surface positioned adjacent to the thick fraction outlet.

In a typical stable floor, gutters are provided in order to collect animal excrements such as faeces and urine. Contact between faeces and urine is to be avoided since it leads to the formation of ammonia, which is undesirable, and since it is preferred to process these animal excrements separately. In order to avoid this contact, stable floor discharge systems according to the preamble are known, e.g. from NL 2009106 C. In such a system, animal excrements are separated using the screening conveying surface into a thick fraction (mainly consisting of faeces) which is conveyed to a longitudinal end of the conveying means and a thin fraction (mainly consisting of urine) which passes through the conveying surface. A person skilled in the art will know how to select a suitable conveying surface for this purpose.

Such a stable floor discharge system however has a number of disadvantages. The contents of the gutter may accumulate in the gutter before being drained. During this period, the contents of the gutter may give off unpleasant or unhealthy smells or gases.

Furthermore, it has been found that the endless conveyor belt of NL 2009106 requires a vast amount of maintenance. In addition, slip may be caused on the rolls of the conveyor belt, which requires the presence of separate tensioning means in order to keep the conveying surface taut, making the construction of the conveying means complicated.

It is now an object to alleviate or even obviate the above-mentioned disadvantages.

This object is achieved with a stable floor discharge system according to the preamble, further comprising covering means, such as a gastight layer, extending between the longitudinal walls of the gutter and arranged between the screening conveying surface and the bottom of the gutter, which covering means are provided with at least one hole for draining the thin fraction to the thin fraction outlet.

The covering means will cover the area in which the liquid fraction is collected, in order to reduce the amount of emission of smells and gases out of the gutter. Any emissions will not be able to pass the covering means. The holes arranged in the otherwise gastight layer (or preferably plurality of holes) allow for passage of the thin fraction towards the thin fraction outlet.

The conveying means are typically vertically spaced apart from the inlet in order to avoid animal excrements to leave the gutter through the inlet, and are vertically spaced apart from the bottom of the gutter in order to have a collection space which is large enough. The covering means are typically vertically spaced apart from and located between the bottom of the gutter and the conveying means in order to avoid direct contact between these components, avoiding irregularities in the functioning of the system, e.g. fouling of the covering means or jamming of the covering means in the conveyor belt.

In a first preferred embodiment of the stable floor discharge system according to the invention, the covering means extend along the conveying means from the first to the second longitudinal end of the conveying means.

Covering means which extend all the way from the first to the second longitudinal end of the conveying means maximize the area covered, thereby further reducing the chance of contact with undesirable emissions.

In a second preferred embodiment of the stable floor discharge system according to the invention, the covering means are made of high density polyethylene.

It has been found that high density polyethylene is a suitable covering means in order to reduce undesirable exposure to emissions which may be given off in the gutter. The covering means are preferably embodied as a funnel-shaped foil.

In a third preferred embodiment of the stable floor discharge system according to the invention, the thick fraction outlet is arranged close to the first longitudinal end of the gutter and the thin fraction outlet is arranged in the bottom of the gutter.

The arrangement of the thick fraction outlet close to the first longitudinal end makes it possible to maximize the distance between the first and the second end of the conveying surface and consequently also the covering means, once again minimizing contact with undesirable emissions. Arrangement of the thick fraction outlet also allows for easy collection for post-processing of the thick fraction. Arrangement of the thin fraction outlet in the floor allows for an easy construction of the gutter.

In a fourth preferred embodiment of the stable floor discharge system according to the invention, the bottom of the gutter slopes down towards the thin fraction outlet.

A slope in the bottom of the gutter towards the thin fraction outlet will cause the thin fraction to flow towards the thin fraction outlet by gravity, increasing the speed of collection and thus reducing undesirable exposure to the smells or gases which may be given off.

In a fifth preferred embodiment of the stable floor discharge system according to the invention, the thick fraction outlet and thin fraction outlet are separated by a wall, extending upright from the bottom of the gutter.

A wall upright from the bottom will reduce the chance of contact between the thick and thin fraction after separation by the screening conveying surface, further reducing the chance of undesirable emissions.

In a sixth preferred embodiment of the stable floor discharge system according to the invention, the gutter comprises a further thick fraction outlet, wherein the conveying means are mounted with the second longitudinal end of the screening conveying surface adjacent to the further thick fraction outlet.

By thus providing thick fraction outlets at opposing ends of the conveying surface, the distance to be covered to the nearest thick fraction outlet may be reduced. Furthermore, it is possible to (temporarily) collect the thick fraction in only one of the two thick fraction outlets, not using the other outlet, allowing for clearing of or maintenance in the outlet.

In a seventh preferred embodiment of the stable floor discharge system according to the invention, the conveying means comprise two reels, around which reels the ends of the screening conveying surface are wound.

While the stable floor discharge system according to NL 2009106 C uses an endless conveyor belt, it is preferred to have the conveying means comprise two reels around which reels the ends of the screening conveying surface are wound, making the conveying surface finite. The reels will always tension the conveying surface, which obviates the need for separate tensioning means, outweighing the typical requirement of two motors instead of just one motor in the case of an endless conveyor belt. Such a construction further reduces the maintenance required.

This embodiment may also be employed in a stable floor discharge system according to the preamble of claim 1.

In an eighth preferred embodiment of the stable floor discharge system according to the invention, the stable floor discharge system further comprises cleaning means, such as a scraping blade, arranged near at least one of the longitudinal ends of the conveying surface for removing the thick fraction from the screening conveying surface.

The provision of cleaning means such as a scraping blade allows for removal of part of the solid fraction from the conveying surface which does not come off under gravity.

The invention further relates to a stable floor, comprising:
- a stable floor discharge system according to the invention;
- an animal support grid, supported on the walls of the gutter; and
- a floor part, supported by at least one of the walls of the gutter, abutting against the animal support grid.

The animal support grid allows animals walking on the floor part to cross the gutter, while allowing for passage of the animal excrements (urine and faeces) to the stable floor discharge system.

These and other features of the invention will be elucidated in conjunction with the accompanying figures.
Figure 1 shows a perspective view of a stable floor according to the invention.
Figure 2 shows a top view of the stable floor according to figure 1, with the animal support grid removed.

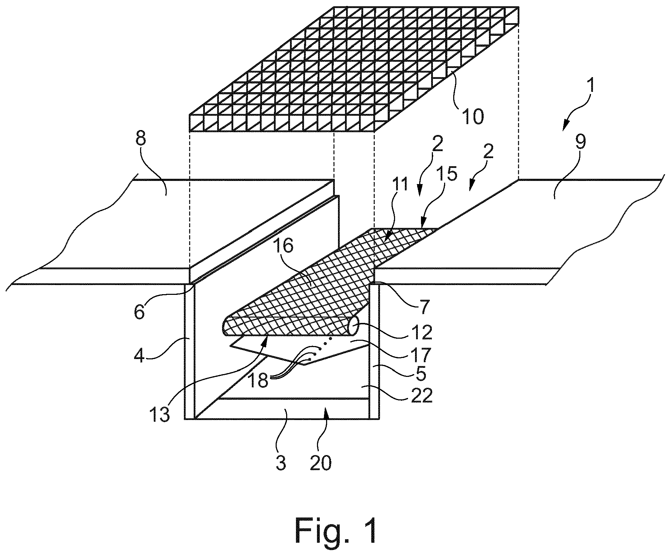

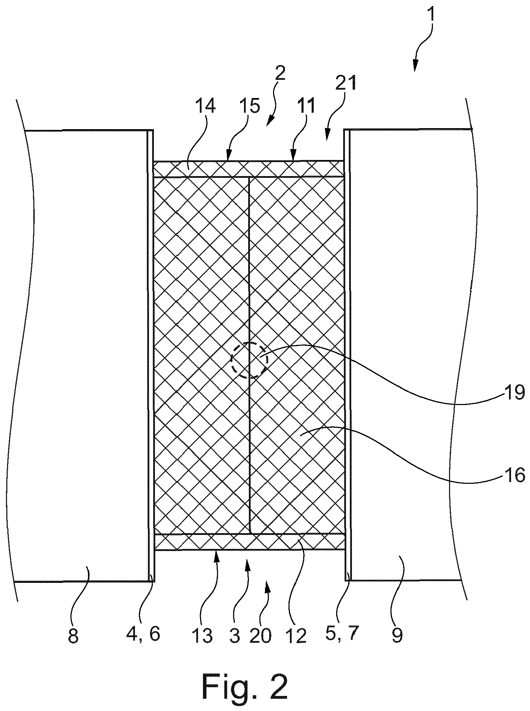

In figures 1 and 2, a stable floor 1 is shown, comprising an elongate gutter 2 with a bottom 3 and two parallel walls 4, 5, upright from the bottom 3. The upper edges 6, 7 of the respective wall 4, 5 define the inlet of the gutter 2. Floor parts 8, 9 are supported on the upper edges 6, 7 of the wall parts 4, 5. An animal support grid 10 is also supported on the upper edges 6, 7 of the wall parts 4, 5 (figure 1). A conveyor belt 11 is mounted within the gutter 2. The conveyor belt 11 comprises a first reel 12 at a first longitudinal end 13 of the conveyor belt 11 and a second reel 14 at a second longitudinal end 15 of the conveyor belt 11. A finite screening conveying surface 16 extends between the reels 12, 14, which can be moved by driving the reels 12, 14. A covering foil 17 extends along the conveyor belt 11 between the first end 13 and the second end 15 and between the bottom 3 and the conveyor belt 11, sloping downward towards the bottom 3. The covering foil 17 is provided with a series of holes 18 for passage of the thin fraction which passes through the screening conveying surface 16. The gutter 2 comprises a thin fraction outlet 19 (shown in dashed lines in figure 2, since it is covered by the covering foil 17) and thick fraction outlets 20, 21 adjacent to the opposing longitudinal ends 13, 15 of the conveyor belt 11. The bottom 3 comprises a section 22 sloping towards the thin fraction outlet 18.

In use, animal excrements passing the animal support grid 10 are dropped onto the screening conveying surface 16, on which the excrements are separated into a thin fraction and a thick fraction. The thin fraction passes through the conveying surface 16 and drops onto the covering foil 17 and passes through the holes 18 and drops onto the sloping section 22, after which it is drained through thin fraction outlet 19. The thick fraction is moved towards one of the first and second longitudinal ends 13, 15, after which it either drops from the conveyor belt 11 under influence of gravity, or is caused to drop from the conveyor belt using cleaning means (not shown), in both cases towards any of the solid fraction outlets 20, 21.

## Claims

1. Stable floor discharge system for animal excrements, comprising:
- an elongate gutter with an inlet between the upper edges of the walls of the gutter, a thick fraction outlet and a thin fraction outlet, longitudinally spaced apart and separated from each other; and
- conveying means, such as a conveyor belt, mounted within the gutter for receiving animal excrements through the inlet of the gutter, which conveying means comprise a screening conveying surface for separating the animal excrements into a thick and a thin fraction, moveable between a first and a second longitudinal end, which conveying means are mounted over the thin fraction outlet and with the first longitudinal end of the screening conveying surface positioned adjacent to the thick fraction outlet
**characterized by**
covering means, such as a gastight layer, extending between the longitudinal walls of the gutter and arranged between the screening conveying surface and the bottom of the gutter, which covering means are provided with at least one hole for draining the thin fraction to the thin fraction outlet.

2. Stable floor discharge system according to claim 1, wherein the covering means extend along the conveying means from the first to the second longitudinal end of the conveying means.

3. Stable floor discharge system according to claim 1 or 2, wherein the covering means are made of high density polyethylene.

4. Stable floor discharge system according to claim 1, 2 or 3, wherein the thick fraction outlet is arranged close to the first longitudinal end of the gutter and wherein the thin fraction outlet is arranged in the bottom of the gutter.

5. Stable floor discharge system according to claim 4, wherein the bottom of the gutter slopes down towards the thin fraction outlet.

6. Stable floor discharge system according to claim 4 or 5, wherein the thick fraction outlet and thin fraction outlet are separated by a wall, extending upright from the bottom of the gutter.

7. Stable floor discharge system according to any of the preceding claims, in which the gutter comprises a further thick fraction outlet, wherein the conveying means are mounted with the second longitudinal end of the screening conveying surface adjacent to the further thick fraction outlet.

8. Stable floor discharge system according to any of the preceding claims, wherein the conveying means comprise two reels, around which reels the ends of the screening conveying surface are wound.

9. Stable floor discharge system according to any of the preceding claims, further comprising cleaning means, such as a scraping blade, arranged near at least one of the longitudinal ends of the conveying surface for removing the thick fraction from the screening conveying surface.

10. Stable floor, comprising:
- a stable floor discharge system according to any of the preceding claims;
- an animal support grid, supported on the walls of the gutter; and
- a floor part, supported by at least one of the walls of the gutter, abutting against the animal support grid.
